# EUROPEAN PATENT SPECIFICATION

(11) **EP 4 518 725 B1**
(45) Date of publication and mention of the grant of the patent: **18.06.2025**
(21) Application number: 23762516.5
(22) Date of filing: 31.08.2023
(51) Int. Cl.: A47J 27/00, A47J 37/06, A47J 36/04, A47J 27/04

(54) **COOKING APPLIANCES WITH THERMAL MANAGEMENT**
KOCHGERÄTE MIT WÄRMEVERWALTUNG
APPAREILS DE CUISSON À GESTION THERMIQUE

(30) Priority: 27.09.2022 EP 22197965
(43) Date of publication of application: 12.03.2025
(73) Proprietor: Versuni Holding B.V., 5656 AE Eindhoven (NL)
(72) Inventor: EGGER, Christian, 5656 AE Eindhoven (NL); SCHRETTLINGER, Joachim, 5656 AE Eindhoven (NL)
(74) Representative: Vollering, Stefanus Franciscus Maria
(86) International application number: PCT/EP2023/073968
(87) International publication number: WO 2024/068178

(56) References cited:
- EP-A1- 4 000 480
- CN-U- 205 286 115
- US-A1- 2017 000 293
- US-A1- 2022 225 825

## Description

### FIELD OF THE INVENTION

This invention relates to a cooking appliance having a cooking chamber and a heating module for heating the cooking chamber.

### BACKGROUND OF THE INVENTION

Various different types of cooking appliances are known, such as table-top cooking appliances that are positionable by the consumer on a table-top or kitchen work-top.

Examples of table-top cooking appliances include air cookers, food steamers and air fryers. Air cookers may be regarded, for instance, as mini convection ovens, owing to having a fan for circulating hot gas in the cooking appliance's cooking chamber across and through the food received therein. The architectures of such table-top cooking appliances may be illustrated as US 2022/225825 A1, CN 205286115 U, US 2017/000293 A1 and/or EP 4000480 A1.

Cooking appliances tend to include sensitive components, such as electrical components, that can be damaged by heat emanating from the cooking chamber unless suitable precautions are taken, for example spacing the sensitive components sufficiently far away from the cooking chamber and/or arranging heat isolating material, such as fiberglass lagging, between the cooking chamber and such sensitive components.

Such measures may, however, compromise the compactness of the cooking appliance's design, and this can be particularly problematic in the case of table-top cooking appliances. Moreover, when measures for thermally isolating the cooking chamber are insufficient or inadequate, efficient operation of the cooking appliance risks being compromised.

### SUMMARY OF THE INVENTION

The invention is defined by the claims.

According to examples in accordance with an aspect of the invention, there is provided a cooking appliance comprising: a non-metallic structural wall that at least partly delimits a cooking chamber in which food is receivable; and a heating module that comprises a heater and a fan arranged to circulate gas in the cooking chamber; wherein the heating module is arranged in the cooking chamber that is at least partly delimited by the structural wall, and a fan motor is arranged outside the cooking chamber.

This may assist to provide a more compact cooking appliance design, and can also assist to improve efficiency of heating of the cooking chamber.

In at least some embodiments, the heating module is configured to heat the cooking chamber to a cooking temperature above 100°C.

In such embodiments, the fan may circulate gas across the heater, and back towards the food received in the cooking chamber. Thus, the heating module can be regarded as a gas heating module.

The fan, together with the heater, is arranged in the cooking chamber at least partly delimited by the structural wall. Arranging, e.g. mounting, the fan and the heater in the cooking chamber in this manner has been found to improve heating of the cooking chamber, and generally assist to ensure effective heat transmission and distribution to the food received in the cooking chamber.

It is desirable to protect sensitive parts, e.g. a fan motor and/or an electronic control unit, arranged outside the cooking chamber from being damaged by heat emanating from inside the cooking chamber. In this aspect, this problem is at least partly addressed by the structural wall being non-metallic, in other words being formed from a non-metallic material.

Such a non-metallic structural wall may inhibit heat transfer through the structural wall.

Thus, such a non-metallic structural wall may assist to protect such sensitive parts, e.g. the fan motor and/or the electronic control unit, arranged outside the cooking chamber from being damaged by heat emanating from inside the cooking chamber.

Moreover, such a non-metallic structural wall can, in certain embodiments, assist to improve efficiency of heating the cooking chamber. This is because of the non-metallic structural wall's capability of retaining heat generated within the cooking chamber.

In this manner, the non-metallic structural wall may assist to shorten heat-up times, in other words the time required for the cooking chamber to reach a desired temperature, e.g. a user-entered set temperature.

The non-metallic material forming the structural wall may accordingly be a heat-insulating material.

Such a heat-insulating material may be regarded as having low heat transmission properties, e.g. lower thermal conductivity than steel and aluminium.

Heat isolation material, e.g. fiberglass lagging or aluminium foil, may be advantageously obviated due to the non-metallic structural wall itself providing sufficient heat insulation.

In some embodiments, the cooking appliance does not include a heat isolation material, e.g. fiberglass lagging, outside the cooking chamber.

Alternatively, only limited heat isolation material, e.g. fiberglass lagging and/or aluminium foil, may be included in the cooking appliance, e.g. wrapped around the structural wall.

The non-metallic structural wall can be formed from any suitable non-metallic material. In some embodiments, the non-metallic structural wall comprises, e.g. is formed from, a plastic material.

Such a plastic material may have suitable heat insulating properties.

In some embodiments, the plastic material is a non-stick plastic material, such as fluoropolymer-comprising material.

Such a plastic material can obviate the need for a non-stick coating to be applied to the structural wall.

Such a non-stick coating, e.g. a fluoropolymer coating, tends to be applied to metallic structural walls to make such structural walls easier to clean after cooking and/or to facilitate removal of cooked food from the cooking chamber.

The non-metallic structural wall may mean that, in at least some embodiments, the cooking appliance does not include a non-stick coating, e.g. a fluoropolymer coating, applied to a surface of the structural wall exposed to the cooking chamber.

Any suitable type of plastic material can be contemplated for the structural wall. The plastic material may, for example, comprise or be a thermoplastic material.

In some embodiments, the plastic material is a thermoplastic fluoropolymer.

Thermoplastic fluoropolymers may, owing to their thermal stability, be particularly well-suited for inclusion in, e.g. forming of, the structural wall. Moreover, thermoplastic fluoropolymers may be sufficiently straightforward to process in order to form the shape of the structural wall that defines the cooking chamber, e.g. via a molding technique, such as injection molding.

In embodiments in which the structural wall comprises, e.g. is formed from, a thermoplastic fluoropolymer, a surface of the thermoplastic fluoropolymer is preferably exposed to the cooking chamber.

This may obviate the requirement for a non-stick coating to be applied to the surface of the structural wall.

More generally, a thermoplastic material may enable the structural wall to be straightforwardly formed, e.g. via a molding technique, such as injection molding.

In some embodiments, the structural wall is formed as a single piece, for instance by being molded, e.g. injection molded, as a single piece. This may assist to minimize gas leakage from the cooking chamber.

Molding, e.g. injection molding, the structural wall as a single piece may also mean that the structural wall can be fabricated in a simple and cost-effective manner.

In some embodiments, the cooking appliance comprises a heat shield, with the heat shield being arranged between the heating module's heater and the structural wall.

The heat shield may assist to enhance distribution of heat across the structural wall, and to damp local temperature peaks on the structural wall.

The heat shield may have enhanced thermal conductivity properties compared to the non-metallic material forming the structural wall.

Moreover, the heat shield may assist to improve efficiency of operation of the cooking appliance by enhancing heat transfer to gas in the cooking chamber, e.g. gas circulated in the cooking chamber by a fan.

In embodiments in which the structural wall comprises, e.g. is formed from, a plastic material, the heat shield may assist to ensure the cooking appliance is operable in a safe operating condition. For example, the heat shield may assist to lessen risk of melting and/or thermal decomposition of such a plastic material.

The heat shield may be formed from any suitable material. Particular mention is made of a metallic material, in other words a metal, such as aluminium, and/or a metal alloy, such as steel.

In some embodiments, the heat shield is formed from stainless steel.

Forming the heat shield from stainless steel may mean that the heat shield is robust and resistant to corrosion, particularly in view of the humidity inside the cooking chamber, e.g. when steam cooking is taking place therein.

In at least some embodiments, the cooking appliance comprises a thermal fuse assembly.

In such embodiments, the thermal fuse assembly may be in thermal communication with the cooking chamber, e.g. via a thermal guide to the cooking chamber.

This may assist to minimize delay in triggering the thermal fuse assembly to interrupt powering of the cooking appliance.

Alternatively or additionally, the thermal fuse assembly may be mounted proximal to the top of the cooking chamber.

In some embodiments, the thermal fuse assembly is arranged at a region of the structural wall behind and aligned with the top of the heater, which top of the heater is proximal to the top of the cooking chamber.

Thus, the thermal fuse assembly may be arranged at a position identified as a hot spot.

In some embodiments, the thermal fuse assembly is arranged, e.g. mounted, outside the cooking chamber.

As well as assisting to protect the thermal fuse assembly from humidity arranging the thermal fuse assembly outside the cooking chamber may avoid electrical wires or connectors for connecting to the thermal fuse assembly being required to extend through the structural wall.

In some embodiments, the thermal fuse assembly is mounted between the heater and the structural wall.

In some embodiments, the thermal fuse assembly is mounted to the heat shield.

More generally, the cooking appliance may comprise a fuse housing for receiving the thermal fuse assembly. In such embodiments, the fuse housing comprises a thermally conductive portion arranged to thermally couple the thermal fuse assembly to the cooking chamber.

The thermally conductive portion may have enhanced heat conduction properties relative to the structural wall, e.g. plastic structural wall, and therefore assist to shorten any delay in triggering the thermal fuse assembly to interrupt powering of the cooking appliance.

The fuse housing may also include a thermally isolating part, e.g. opposing the thermally conductive portion. Such a thermally isolating part may, for instance, be formed from a non-metallic, e.g. plastic, material.

The thermally isolating part may assist to thermally isolate the thermal fuse assembly from a cooling air flow provided by a cooling fan included in the cooking appliance.

In some embodiments, the cooking appliance comprises a fuse sealing, such as a silicone rubber gasket, arranged between the thermally isolating part and the thermally conductive portion to seal the thermal fuse assembly between the thermally isolating part and the thermally conductive portion.

The thermally conductive portion can be defined by a fuse cover portion of the heat shield.

Alternatively or additionally, the thermally isolating part may be defined by a fuse cover part of the structural wall, e.g. plastic structural wall.

In some embodiments, the cooking appliance includes a partition wall arranged in the cooking chamber to partition the cooking chamber into a food receiving zone for receiving the food and a heating module zone in which the heating module is arranged.

The partition wall can be formed from any suitable material, such as a metal or metal alloy, e.g. steel.

By the partition wall being formed from a metal or metal alloy, the partition wall may assist to ensure effective heat transfer from the heating module zone to the food receiving zone. The metallic partition wall may thus contribute to the cooking appliance's cooking performance.

In some embodiments, the partition wall delimits gas delivery vents through which heated gas from the heating module zone is deliverable into the food receiving zone, and a gas inlet through which gas from the food receiving zone is deliverable into the heating module zone.

The partition wall may, owing to its function in such embodiments of delivering gas between the food receiving zone and the heating module zone, be regarded as a gas guiding member.

In some embodiments, the gas inlet is centrally arranged in the partition wall with the gas delivery vents being peripherally arranged in the partition wall. Thus, gas from the food receiving zone may be supplied into a central portion of the heating module, (re-)heated, and the (re-)heated gas delivered back into a peripheral portion, or peripheral portions, of the food receiving zone. This may assist to provide a desirable cooking result.

In some embodiments, the cooking appliance comprises an outer housing and an air cooling channel arranged between the outer housing and the structural wall.

The cooling provided by the air cooling channel may assist to protect such sensitive parts from being damaged by heat emanating from inside the cooking chamber.

In such embodiments, the cooking appliance may include a cooling fan arranged to displace air in the air cooling channel.

The cooling fan may enhance the cooling provided by the air cooling channel.

Rotation of the cooling fan may be driven in any suitable manner. In some embodiments, the motor that drives rotation of the fan is arranged to rotate the cooling fan.

For example, both the fan and the cooling fan may be mounted to a spindle, in other words shaft, of a single motor.

This may provide an advantageously simple, compact, and cost-effective design.

In some embodiments, the cooking appliance comprises an electronic control unit adjacent a portion of the air cooling channel.

Thus, the air cooling channel may assist to protect the electronic control unit from being damaged by heat emanating from inside the cooking chamber.

The cooking appliance may comprise a bottom and a top when orientated for use, a front side extending between the bottom and the top, and a rear side extending between the bottom and the top, with the rear side opposing the front side across the cooking chamber.

In such embodiments, the outer housing may delimit at least one ambient air inlet through which ambient air is deliverable into the air cooling channel, and at least one outlet for expelling the air.

The at least one ambient air inlet and the at least one outlet may be arranged to define a cooling flow path between the front side and the rear side, for example from the front side towards the rear side (or from the rear side towards the front side).

For example, the at least one ambient air inlet may be arranged at the front side, with the at least one outlet being arranged at the rear side.

In such embodiments, the cooling fan may be arranged to draw air into the air cooling channel via the at least one ambient air inlet and cause the air to be expelled via the at least one outlet.

In some embodiments, the electronic control unit may be arranged at or proximal to the front side and distal with respect to the rear side.

Alternatively or additionally, the fan may be arranged proximal to the front side and distal with respect to the rear side.

Thus, the electronic control unit and/or motor may be arranged at or proximal to the side, in other words the front side, of the cooking appliance that receives the fresh ambient air initially introduced into the air cooling channel. The concomitant enhanced cooling of the electronic control unit may assist to protect the electronic control unit from being damaged by heat emanating from inside the cooking chamber.

According to another aspect not forming part of the invention there is provided a cooking appliance comprising:
a structural wall that at least partly delimits a cooking chamber in which food is receivable, wherein the cooking appliance has a bottom and a top when orientated for use, a front side extending between the bottom and the top, and a rear side extending between the bottom and the top, the rear side opposing the front side across the cooking chamber; a heating module for heating the cooking chamber, the heating module being arranged closer to the front side than to the rear side; an outer housing; and an air cooling channel arranged between the outer housing and the structural wall, wherein the outer housing delimits at least one ambient air inlet through which ambient air is deliverable into the air cooling channel, and wherein the outer housing delimits at least one outlet for expelling the air, the at least one ambient air inlet and the at least one outlet being arranged to define a cooling flow path between the front side and the rear side, for example from the front side towards the rear side (or from the rear side towards the front side).

The air cooling channel may assist to protect parts, e.g. electrical components, from being damaged by heat emanating from inside the cooking chamber, particularly when such parts are arranged at or proximal to the front side of the cooking appliance. Thus, the air cooling channel can be regarded as providing an alternative solution to the above-described problem addressed by the structural wall being a non-metallic structural wall.

In this aspect not according to the invention, the structural wall can be metallic or non-metallic.

For example, the structural wall can be made of a metal or metal alloy, e.g. to which a non-stick coating is applied.

The cooking appliance may include a cooling fan arranged to displace air in the air cooling channel, for example with the cooling fan being arranged to draw air into the air cooling channel via the at least one ambient air inlet and cause the air to be expelled via the at least one outlet.

Alternatively or additionally, the heating module may be arranged in the cooking chamber that is at least partly delimited by the structural wall.

Alternatively or additionally, the heating module may comprise a heater arranged in the cooking chamber.

Alternatively or additionally, the cooking appliance may comprise a heat shield, with the heat shield being arranged between the heating module's heater and the structural wall.

Alternatively or additionally, the cooking appliance comprises a thermal fuse assembly, for example with the thermal fuse assembly being in thermal communication with the cooking chamber. Such a thermal fuse assembly may, for instance, be mounted to the heat shield.

Alternatively or additionally, the heating module comprises a fan arranged to circulate gas in the cooking chamber, for example with the fan and the heater being arranged in the cooking chamber.

Alternatively or additionally, a motor that drives rotation of the fan may be arranged to rotate the cooling fan.

Alternatively or additionally, the cooking appliance comprises an electronic control unit arranged at or proximal to the front side, and distal with respect to the rear side, for example with the electronic control unit being adjacent a portion of the air cooling channel.

More generally, other than the material for the structural wall, the embodiments described herein in relation to the first aspect are applicable to this second aspect.

It is also noted, in a general sense, that the cooking appliance according to aspects of the present disclosure may be a table-top cooking appliance, e.g. a top-loaded table-top cooking appliance.

Such a table-top cooking appliance is positionable by the consumer on a table-top or kitchen work-top.

The table-top cooking appliance may be, for example, a so-called air cooker, a food steamer and/or an air fryer.

The cooking chamber has, when orientated for use, a top and a bottom.

When the table-top cooking appliance is an air fryer, the fan may be arranged to circulate gas upwardly through food received in the cooking chamber, e.g. in the food receiving zone, in the direction of the top and/or downwardly through food received in the cooking chamber in the direction of the bottom.

When the table-top cooking appliance is an air cooker, the fan may be arranged to circulate gas laterally across and through food received in the cooking chamber, e.g. in the food receiving zone, with the gas being laterally directed towards side portion(s) of the structural wall extending between the top and bottom of the cooking chamber.

Such lateral directing of the gas can be implemented, for instance, by the gas delivery vent(s) delimited by the partition wall being proximal to the top of the cooking chamber, e.g. above the gas inlet. In such embodiments, the gas inlet can, for example, be centrally arranged in the partition wall.

In such a design, the gas delivered into the cooking chamber via the gas delivery vent(s) proximal to the top of the cooking chamber can be directed over the food received in the cooking chamber and return towards the lower gas inlet through and/or underneath the food.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 provides an exploded view of a cooking appliance according to an example;
FIG. 2 provides an interior view of a cooking appliance according to an example;
FIG. 3 provides an interior view of a cooking appliance according to another example comprising a heat shield in the cooking appliance's cooking chamber;
FIG. 4 schematically depicts fluid flow in the cooking appliance shown in FIG. 2;
FIG. 5 provides a perspective view of the fluid flow shown in FIG. 4;
FIG. 6 provides a graph of temperature at cooking chamber locations vs time in a simulated a fault or failure condition of the cooking appliance;
FIG. 7 provides a graph of temperature at cooking chamber locations vs time in another simulated a fault or failure condition of the cooking appliance;
FIG. 8 shows a part of the cooking appliance shown in FIG. 3;
FIG. 9 shows the heat shield of the cooking appliance shown in FIG. 3;
FIG. 10 provides a graph of temperature at a cooking chamber location vs time during normal operation of the cooking appliance shown in FIG. 3, and a comparison graph for a cooking appliance not including the heat shield;
FIG. 11 provides a graph of temperature at a cooking chamber location vs time during a simulated fault or failure condition of the cooking appliance shown in FIG. 3, and a comparison graph for a cooking appliance not including the heat shield;
FIGs. 12 and 13 show a thermal fuse assembly of the cooking appliance shown in FIG. 3; and
FIGs. 14 to 17 show alternative arrangements for mounting a thermal fuse assembly in the cooking appliance to that shown in FIGs. 12 and 13.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a cooking appliance comprising a non-metallic structural wall that at least partly delimits a cooking chamber in which food is receivable. The cooking appliance also includes a heating module for heating the cooking chamber. The non-metallic structural wall that at least partly defines the cooking chamber assists to protect parts, e.g. electrical components, from being damaged by heat emanating from inside the cooking chamber. As an alternative solution to the same problem, the present disclosure also provides a cooking appliance comprising a structural wall that at least partly delimits a cooking chamber in which food is receivable, with the cooking appliance having a bottom and a top when orientated for use, and a front side and a rear side that each extend between the bottom and the top. The rear side opposes the front side across the cooking chamber. The cooking appliance also includes a heating module for heating the cooking chamber, with the heating module being arranged proximal to the front side and distal with respect to the rear side, in other words closer to the front side than the rear side. The cooking appliance further comprises an outer housing. An air cooling channel is arranged between the outer housing and the structural wall. The outer housing delimits at least one ambient air inlet through which ambient air is deliverable into the air cooling channel, and at least one outlet for expelling the air. The at least one ambient air inlet and the at least one outlet are arranged so that a cooling flow path is defined between the front side and the rear side, for example from the front side towards the rear side. This arrangement assist to protect parts, e.g. electrical components, from being damaged by heat emanating from inside the cooking chamber, particularly when such parts are arranged at or proximal to the front side of the cooking appliance.

In some embodiments, the cooking appliance also includes a steam heater module in addition to the heating module.

Such a steam heater module can include a dedicated heater arranged to heat a water evaporation portion so as to promote vaporization of water received in the water evaporation area. The water evaporation portion can, for instance, be arranged in the cooking chamber.

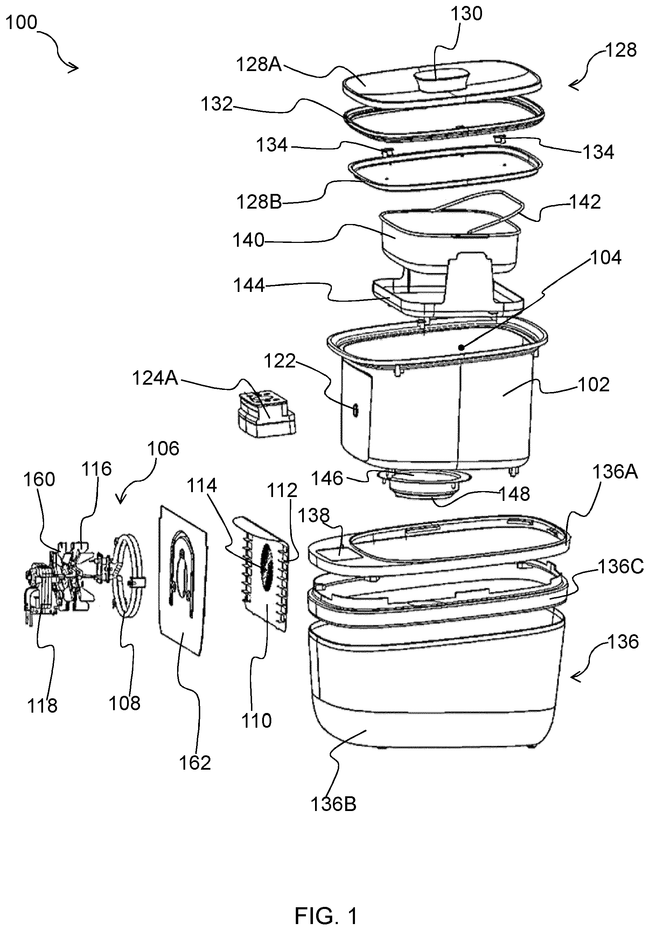

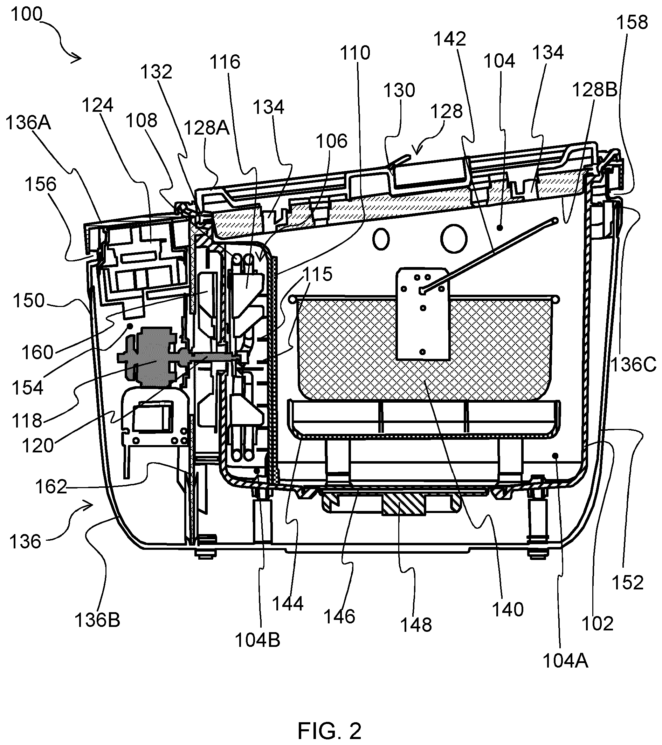

FIG. 1 provides an exploded view of a cooking appliance 100 according to an example. FIG. 2 provides a view of such a cooking appliance 100 when assembled.

Evident in FIGs. 1 and 2 is a structural wall 102 that at least partly delimits a cooking chamber 104 in which food (not visible) is receivable. The cooking appliance 100 also comprises a heating module 106 for heating the cooking chamber 104.

The term "structural wall" refers to the structural wall's 102 function of structurally defining the shape of the cooking chamber 104.

The term "structural wall" thus excludes, for example, a coating per se, since such a coating cannot by itself structurally define the shape of the cooking chamber 104. Rather, it is the structural wall 102 to which such a coating may be applied that structurally defines the shape of the cooking chamber 104.

The structural wall 102 may have a surface exposed to the cooking chamber 104, which surface at least partly delimits the cooking chamber 104.

In such embodiments, the surface may be a continuous surface, in other words a surface without sharp edges and dislocations.

Such a continuous surface may be relatively easy to clean and may also assist to minimize accumulation of food debris, grease, etc. that may otherwise collect at sharp edges dislocations of the structural wall's 102 surface.

In some embodiments, the heating module 106 is arranged in the cooking chamber 104 that is at least partly delimited by the structural wall 102.

Placing the heating module 106 within the cooking chamber 104 may assist to provide a more compact cooking appliance 100 design, and can also assist to improve efficiency of heating of the cooking chamber 104.

In at least some embodiments, the heating module 106 is configured to heat the cooking chamber 104 to a cooking temperature above 100°C.

In some embodiments, such as shown in FIGs. 1 and 2, the heating module 106 comprises a heater 108 arranged in the cooking chamber 104. In other words, the heater 108 is arranged in the cooking chamber 104 at least partly delimited by the structural wall 102.

Arrangement of the heater 108 in the cooking chamber 104 can assist to ensure effective heat transmission and distribution to the food received in the cooking chamber 104.

In such embodiments, heater connectors (not visible in FIGs. 1 and 2) may extend through the structural wall 102 in order to reach, and connect to, the heater 108.

The heater 108 can have any suitable design. In some embodiments, such as those depicted in FIGs. 1 to 3, the heater 108 comprises, or is in the form of, a resistive heating element.

Such a resistive heating element may, for example, comprise coils spaced apart from each other to enable heating of gas passing across and between the coils. Examples of this are shown in FIGs. 1 to 3.

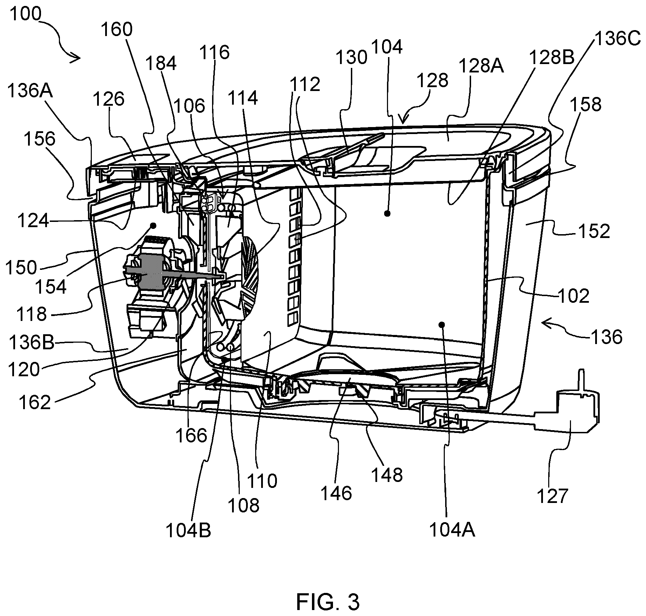

In some embodiments, and as best shown in the examples depicted in FIGs. 2 and 3, the cooking appliance 100 includes a partition wall 110 arranged in the cooking chamber 104 to partition the cooking chamber 104 into a food receiving zone 104A for receiving the food and a heating module zone 104B in which the heater 108 is arranged.

The partition wall 110 can be formed from any suitable material, such as a metal or metal alloy, e.g. steel.

By the partition wall 110 being formed from a metal or metal alloy, the partition wall 110 may assist to ensure effective heat transfer from the heating module zone 104B to the food receiving zone 104A. The metallic partition wall 110 may thus contribute to the cooking appliance's 100 cooking performance.

In some embodiments, and referring to the non-limiting examples depicted in FIGs. 1 and 3, the partition wall 110 delimits gas delivery vents 112 through which heated gas from the heating module zone 104B is deliverable into the food receiving zone 104A, and a gas inlet 114 through which gas from the food receiving zone 104A is deliverable into the heating module zone 104B.

The partition wall 110 may, owing to its function in such embodiments of delivering gas between the food receiving zone 104A and the heating module zone 104B, be regarded as a gas guiding member.

The gas delivery vents 112 and the gas inlet 114 can have any suitable design. In some embodiments, and as best shown in FIG. 3, the gas inlet 114 is defined by gaps in a grille, in this non-limiting example a circular grille.

Alternatively or additionally, the cooking appliance 100 comprises shelf portions 115, with each shelf portion 115 extending in the heating module zone 104B to each of the gas delivery vents 112, as best shown in FIG. 2, and/or extending from each of the gas delivery vents 112 into the food receiving zone 104A (not visible).

Such shelf portions 115 may assist to guide delivery of gas from the heating module zone 104B into the food receiving zone 104A.

At this point it is noted that the gas can comprise or be air, steam, and/or smoke. The composition of the gas may depend on, for instance, the food being cooked and the conditions within the cooking chamber 104.

In some embodiments, the gas inlet 114 is centrally arranged in the partition wall 110 with the gas delivery vents 112 being peripherally arranged in the partition wall 110. Thus, gas from the food receiving zone 104A may be supplied into a central portion of the heating module 106, (re-)heated, and the (re-)heated gas delivered back into a peripheral portion, or peripheral portions, of the food receiving zone 104A. This may assist to provide a desirable cooking result.

The gas delivery vents 112 may, for example, be arranged along a first lateral side of the partition wall 110, and along a second lateral side of the partition wall 110 that opposes the first lateral side.

The gas delivery vents 112 can, more generally, be regarded as being "lateral gas delivery vents 112" through which gas is delivered from the heating module zone 104B into the food receiving zone 104A at one or both lateral sides of the food receiving zone 104A. Such lateral sides may each extend from a bottom of the cooking chamber 104 towards a top of the cooking chamber 104 when the cooking appliance is orientated for use.

In at least some embodiments, the heating module 106 comprises a fan 116 arranged to circulate gas in the cooking chamber 104.

In such embodiments, the fan 116 may circulate gas across the heater 108, and back towards the food received in the cooking chamber 104. Thus, the heating module 106 can be regarded as a gas heating module 106.

The fan 116, together with the heater 108, may be arranged in the cooking chamber 104 at least partly delimited by the structural wall 102. Examples of this are depicted in FIGs. 1 to 3.

Arranging, e.g. mounting, the fan 116 and the heater 108 in the cooking chamber 104 in this manner has been found to improve heating of the cooking chamber 104, and generally the energy efficiency of the cooking appliance 100.

In embodiments in which the cooking chamber 104 is partitioned by the partition wall 110 into the food receiving zone 104A and the heating module zone 104B, the fan 116, together with the heater 108, may be arranged in the heating module zone 104B.

Alternatively or additionally, the fan 116 may be arranged to draw gas from the food receiving zone 104A into the heating module zone 104B, across the heater 108, and expel the gas from the heating module zone 104B back into the food receiving zone 104A.

In embodiments, such as those shown in FIGs. 1 to 3, in which the partition wall 110 is delimited by the centrally arranged gas inlet 114 and the peripherally arranged gas delivery vents 112, the fan 116 may be arranged to draw gas from the food receiving zone 104A axially through the gas inlet 114 and divert the gas radially across the heater 108 in the direction of the gas delivery vents 112.

Thus, the arrangement of the fan 116, in combination with the configuration of the gas delivery vents 112 and the gas inlet 114, may assist to provide the desired gas circulation in the cooking chamber 104.

Rotation of the fan 116 may be driven in any suitable manner. In some embodiments, such as those shown in FIGs. 1 to 3, the cooking appliance 100 comprises a motor 118 arranged to rotate the fan 116.

In such embodiments, the motor 118 is preferably arranged outside the cooking chamber 104. In other words, the structural wall 102 may be arranged between the cooking chamber 104 and the motor 118.

Thus, the motor 118 may be protected from cooking conditions, in particular the heat and humidity conditions, inside the cooking chamber 104.

To this end, and referring to Figs. 2 and 3, a spindle 120, in other words fan shaft, may extend from the fan 116 inside the cooking chamber 104, e.g. in the heating module zone 104B, to the outside of the cooking chamber 104 in the direction of the motor 118.

The fan 116 may thus be driven to rotate by the motor 118 via the spindle 120. Referring to FIG. 1, the structural wall 102 may correspondingly delimit an aperture 122 through which the spindle 120 can extend into the cooking chamber 104.

In some embodiments, such as those depicted in FIGs. 1 to 3, the cooking appliance 100 comprises an electronic control unit 124 arranged outside the cooking chamber 104. In other words, the structural wall 102 may be arranged between the cooking chamber 104 and the electronic control unit 124.

Such an electronic control unit 124 may be configured to control the heating module 106, e.g. configured to control the heater 108 and/or rotation of the fan 116.

In such embodiments, and referring to FIG. 3, the electronic control unit 124 may include a user interface 126. In such embodiments, the electronic control unit 124 may be configured to control the heating module 106, e.g. the heater 108 and/or rotation of the fan 116, based on one or more user entry made via the user interface 126.

The user interface 124 may, for example, be configured to enable user entry of a set temperature of the cooking chamber 104 and/or a duration of heating the cooking chamber 104 at a set temperature, e.g. before an alarm signal is activated and/or the heating module 106 is controlled to stop heating or at least lower the temperature of the cooking chamber 104.

Alternatively or additionally, the user interface 126 may be configured to communicate information, e.g. cooking parameter information, to the user. To this end, the user interface 126 may include a display for displaying information.

The electronic control unit 124 may include processor(s), e.g. microcontroller(s), configured to control the cooking appliance 100, e.g. the heating module 106 included in the cooking appliance 100.

The processor(s) may, for instance, be configured to receive data from the user interface 124 and/or from an external device, such as a smart phone or tablet computer, and control the cooking appliance 100, e.g. the heating module 106, based on the data.

In some embodiments, such as that shown in FIG. 1, the electronic control unit 124 includes a printed circuit board assembly 124A.

The processor(s) may be mounted via the printed circuit board assembly 124A. Alternatively or additionally, the above-described user interface 126 may be connected to the printed circuit board assembly 124A.

More generally, it is desirable to protect sensitive parts, e.g. the motor 118 and/or the electronic control unit 124, arranged outside the cooking chamber 104 from being damaged by heat emanating from inside the cooking chamber 104. One way of addressing this issue is by the structural wall 102 being non-metallic, in other words being formed from a non-metallic material.

Such a non-metallic structural wall 102 may inhibit heat transfer through the structural wall 102.

Thus, such a non-metallic structural wall 102 may assist to protect sensitive parts, e.g. the motor 118 and/or the electronic control unit 124, arranged outside the cooking chamber 104 from being damaged by heat emanating from inside the cooking chamber 104.

Moreover, such a non-metallic structural wall 102, particularly when at least part of the heating module 106, e.g. the heater 108, is received in the cooking chamber 104, can assist to improve efficiency of heating the cooking chamber 104. This is because of the non-metallic structural wall's capability of retaining the heat generated by the heating module 106 within the cooking chamber 104.

In this manner, the non-metallic structural wall 102 may assist to shorten heat-up times, in other words the time required for the cooking chamber 104 to reach a desired temperature, e.g. the above-mentioned user-entered set temperature.

Thus, the non-metallic structural wall 102 may assist to improve the cooking chamber's 104 primary function, with concomitant benefit to cooking/food results.

The non-metallic material forming the structural wall 102 may accordingly be a heat-insulating material.

Such a heat-insulating material may be regarded as having low heat transmission properties, e.g. lower thermal conductivity than steel and aluminium.

Heat isolation material, e.g. fiberglass lagging or aluminium foil, may be advantageously obviated due to the non-metallic structural wall 102 itself providing sufficient heat insulation.

In some embodiments, the cooking appliance 100 does not include a heat isolation material, e.g. fiberglass lagging, outside the cooking chamber 104.

Alternatively, only limited heat isolation material, e.g. fiberglass lagging and/or aluminium foil, may be included in the cooking appliance 100, e.g. wrapped around the structural wall 102.

The non-metallic structural wall 102 can be formed from any suitable non-metallic material. In some embodiments, the non-metallic structural wall comprises, e.g. is formed from, a plastic material.

Such a plastic material may have suitable heat insulating properties.

In some embodiments, the plastic material is a non-stick plastic material, such as fluoropolymer-comprising material.

Such a plastic material can obviate the need for a non-stick coating to be applied to the structural wall 102.

Such a non-stick coating, e.g. a fluoropolymer coating, tends to be applied to metallic structural walls 102 to make such structural walls 102 easier to clean after cooking and/or to facilitate removal of cooked food from the cooking chamber 104.

The non-metallic structural wall 102 may mean that, in at least some embodiments, the cooking appliance 100 does not include a non-stick coating, e.g. a fluoropolymer coating, applied to a surface of the structural wall 102 exposed to the cooking chamber 104.

Any suitable type of plastic material can be contemplated for the structural wall 102. The plastic material may, for example, comprise or be a thermoplastic material.

In some embodiments, the plastic material is a thermoplastic fluoropolymer.

Thermoplastic fluoropolymers may, owing to their thermal stability, be particularly well-suited for inclusion in, e.g. forming of, the structural wall 102. Moreover, thermoplastic fluoropolymers may be sufficiently straightforward to process in order to form the shape of the structural wall 102 that defines the cooking chamber 104, e.g. via a molding technique, such as injection molding.

It is further noted that a thermoplastic fluoropolymer can provide non-stick properties to the structural wall 102.

Thus, in embodiments in which the structural wall 102 comprises, e.g. is formed from, a thermoplastic fluoropolymer, a surface of the thermoplastic fluoropolymer is preferably exposed to the cooking chamber 104.

More generally, a thermoplastic material may enable the structural wall 102 to be straightforwardly formed, e.g. via a molding technique, such as injection molding.

Injection molding of the structural wall 102 may enable mounting of interface parts directly to the structural wall 102, e.g. without protrusions requiring sealing to prevent unintentional leaking of fluid, e.g. gas, from the cooking chamber 104 where such interface parts are mounted.

Openings of and interfaces with the structural wall 102 may generally be reduced to a minimum.

In some embodiments, such as depicted in FIGs. 1 to 3, the structural wall 102 is formed as a single piece, for instance by being molded, e.g. injection molded, as a single piece. This may assist to minimize gas leakage from the cooking chamber 104.

Molding, e.g. injection molding, the structural wall as a single piece may also mean that the structural wall 102 can be fabricated in a simple and cost-effective manner.

At this point it is noted that the measures, such as the non-metallic structural wall 102, described herein for assisting to protect parts, e.g. electrical components, from being damaged by heat emanating from inside the cooking chamber 104, may be applicable to any type of cooking appliance 100. However, particular mention is made of the cooking appliance 100 being a table-top cooking appliance 100, e.g. a top-loaded table-top cooking appliance 100.

Such a table-top cooking appliance 100 is positionable by the consumer on a table-top or kitchen work-top.

The table-top cooking appliance 100 may be, for example, a so-called air cooker, food steamer and/or an air fryer.

The compact design necessitated by such a table-top cooking appliance 100 may mean that sensitive parts, e.g. electrical components, may be arranged more closely to the cooking chamber 104 than in other cooking appliance 100 designs, such as built-in ovens. Accordingly, the measures, such as the non-metallic structural wall 102, described herein for assisting to protect parts, e.g. electrical components, from being damaged by heat emanating from inside the cooking chamber 104 may be particularly advantageous in such table-top cooking appliances 100.

Alternatively or additionally, the heat transfer/energy efficiency benefits derived from features included in at least some of the embodiments described herein may be particularly advantageous in such table-top cooking appliances 100 owing to the table-top cooking appliances 100 being configured to consume less power than, for instance, built-in ovens.

The cooking appliance 100, e.g. table-top cooking appliance 100, can be powered in any suitable manner, such as by one or more batteries and/or via a mains source of power. In embodiments, such as that shown in FIG. 3, in which the cooking appliance 100 is powerable by a mains source of power, the cooking appliance 100 can include a plug 127 for connecting to a mains power socket (not visible).

In some embodiments, such as shown in FIGs. 1 to 3, the cooking appliance 100 comprises a lid 128 for closing and accessing the cooking chamber 104.

When the cooking chamber 104 is closed by the lid 128, the cooking chamber 104 is at least partly, and in some embodiments fully, delimited by the lid 128 together with the structural wall 102.

The lid 128 may oppose the bottom of the cooking chamber 104 when the cooking appliance 100 is orientated for use.

In such embodiments, the cooking appliance 100 may be regarded as a top-loaded cooking appliance 100, since moving the lid 128 to access the cooking chamber 104 enables loading of the cooking chamber 104 from above, when the cooking appliance 100 is orientated for use, e.g. by being placed on a table-top or kitchen counter-top with the bottom of the cooking appliance 100 proximal to the table-top or kitchen counter-top and the lid 128 distal with respect to the table-top or kitchen counter-top supporting the cooking appliance 100 in use.

In some embodiments, such as shown in FIGs. 1 to 3, the lid 128 comprises a handle 130 for assisting a user to move the lid 128 in order to close or access the cooking chamber 104.

The lid 128 may be movable to close or access the cooking chamber 104 in any suitable manner, for example by being mounted via a hinge such that pivoting of the lid 128 enables closing and accessing of the cooking chamber 104 and/or being detachably mounted such that detaching the lid 128 enables accessing of the cooking chamber 104 and replacement of the lid 128 enables closing of the cooking chamber 104.

In some embodiments, such as shown in FIGs. 1 to 3, the lid 128 comprises an outer lid part 128A and an inner lid part 128B spaced apart from the outer lid part 128A.

In such embodiments, the spatial separation of the outer lid part 128A and the inner lid part 128B may assist to insulate the outer lid part 128A from the heat of the cooking chamber 104, thereby lessening the risk of discomfort or injury to the user resulting from contacting an exterior surface of the lid 128. Moreover, this design may assist to retain heat within the cooking chamber 104.

Such an exterior surface of the lid 128 may, for example, be an exterior surface of the outer lid part 128A and/or an exterior surface of the handle 130.

In the case of the above-described top-loaded cooking appliance 100, the outer lid part 128A may be an upper lid part 128A, with the inner lid part 128B being a lower lid part 128B. Examples of this are shown in FIGs. 1 to 3.

The outer lid part 128A may be coupled to the inner lid part 128B such that movement of the lid 128 entails movement of the outer lid part 128A together with the inner lid part 128B.

To this end, the lid 128 may include one or more lid connectors 134 configured to connect the outer lid part 128A and the inner lid part 128B to each other.

In some embodiments, such as shown in FIGs. 1 and 2, the lid 128 comprises a sealing member 132, e.g. a sealing ring or gasket, configured to seal the space between the outer lid part 128A and the inner lid part 128B.

This may assist to lessen thermal conduction between the cooking chamber 104 and the outer lid part 128A since, for example, hot gas from the cooking chamber 104 may be restricted or prevented by the sealing member 132 from accessing the space between the outer lid part 128A and the inner lid part 128B.

The sealing member 132, e.g. sealing ring or gasket, can be formed from any suitable material, such as an elastomeric material, e.g. silicone rubber.

In some embodiments, the lid 128 is made at least partly from a transparent material to provide a view into the cooking chamber 104.

In some embodiments, the lid 128, e.g. the at least partly transparent lid 128, is mounted to the cooking appliance 100 with one or more hinges.

In at least some embodiments, such as shown in FIGs. 1 to 3, the cooking appliance 100 comprises an outer housing 136 in which the structural wall 102 is housed.

The outer housing 136 may be formed from any suitable material, such as a metal, metal alloy and/or plastic material. A plastic material may be preferred for the outer housing 136 for weight-saving reasons.

Any suitable design for the outer housing 136 can be contemplated. In some embodiments, such as shown in FIGs. 1 to 3, the outer housing 136 comprises a top outer housing part 136A, a bottom outer housing part 136B, and a middle outer housing part 136C arranged between the top outer housing part 136A and the bottom outer housing part 136B. It is noted that the terms "top outer housing part 136A" and "bottom outer housing part 136" may refer to the positioning of the respective outer housing part 136A, 136B when the cooking appliance 100 is orientated for use.

In embodiments in which the cooking appliance 100 includes the lid 128, the top outer housing part 136A may be proximal to, e.g. detachably coupled to, the lid 128, with the bottom outer housing part 136B being distal with respect to the lid 128. The bottom outer housing part 136B may also, for instance, be proximal to a table-top and/or a kitchen counter-top supporting the cooking appliance 100 in use.

In embodiments in which the cooking appliance 100 includes the user interface 126, the outer housing 136 may delimit, as best shown in FIG. 1, one or more openings 138 in which the user interface 126 is arrangeable. For instance, the opening(s) 138 may be delimited by the top outer housing part 136A.

In some embodiments, such as shown in FIGs. 1 and 2, the cooking appliance 100 comprises a food support 140, such as a food basket, receivable in the cooking chamber 104.

The food support 140, e.g. food basket, may be made from any suitable material. For example, the food support 140, e.g. food basket, comprises a structure formed from a metal, e.g. aluminium, or metal alloy, e.g. steel.

The food support 140, e.g. food basket, may comprise a coating, such as a non-stick, e.g. fluoropolymer, coating applied to such a structure formed from a metal or metal alloy.

In some embodiments, the food support 140 is a food basket having a steel mesh structure. In a non-limiting example, the food support 140 is a food basket having a steel mesh structure coated with a non-stick, e.g. fluoropolymer, coating.

In embodiments in which the cooking chamber 104 is partitioned into the food receiving zone 104A and the heating module zone 104B, the food support 140, e.g. food basket, may be receivable in the food receiving zone 104A.

Such a food support 140 may be removable from the cooking chamber 104, e.g. removable from the food receiving zone 104A, for instance by lifting the food support 140 out of the cooking chamber 104 when the lid 128 is moved to provide access to the cooking chamber 104.

Thus, the food support 140 may be removed from the cooking chamber 104 for cleaning. Alternatively or additionally, food may be straightforwardly removed from the food support 140 or placed upon the food support 140 while the food support 140 is removed from the cooking chamber 104. Once the food has been placed upon the food support 140, the food support 140 together with the food may be received in the cooking chamber 104, e.g. followed by movement of the lid 128 to close the cooking chamber 104.

To this end, the food support 140, e.g. food basket, may include a handle 142 for assisting placement of the food support 140 in, and removal of the food support 140 from, the cooking chamber 104.

As an alternative or in addition to the food support 140, and as illustrated in FIGs. 1 and 2, the cooking appliance 100 may include a drip tray 144 receivable in the cooking chamber 104, e.g. receivable in the food receiving zone 104A of the cooking chamber 104.

The drip tray 144 may catch oil and grease from the food, so as to minimize pollution of the surface of the structural wall 102 by such oil and grease.

Such a drip tray 144 may, similarly to the food support 140, be removable from the cooking chamber 104, e.g. removable from the food receiving zone 104A, for instance by lifting the drip tray 144 out of the cooking chamber 104 when the lid 128 is moved to provide access to the cooking chamber 104.

Thus, the drip tray 144 may be removed from the cooking chamber 104 for straightforward disposal of the oil and grease, and for cleaning.

In some embodiments, such as shown in FIGs. 1 to 3, the cooking appliance 100 comprises a water evaporation portion 146 arranged at the bottom of the cooking chamber 104.

In such embodiments, the structural wall 102 may delimit a gap for receiving the water evaporation portion 146, for instance in the form of a plate member made from a metal, e.g. aluminium, or metal alloy, e.g. steel.

In such embodiments, the cooking appliance 100 may include a further heater 148, e.g. a flat heater 148, arranged to heat the water evaporation portion 146 so as to promote vaporization of water received in the water evaporation area 146.

The water evaporation portion 146 may have any suitable shape. In some embodiments, the water evaporation portion 146 is circular when viewed in plan from above the bottom of the cooking chamber 104.

To operate the cooking appliance 100 for steam cooking, the user may fill the water evaporation portion 146 by supplying water into the bottom of the cooking chamber 104. The heater 108 and/or the further heater 148 may evaporate the water to generate steam.

In embodiments in which the heating module 106 includes the fan 116, the cooking appliance 100 may be operated in an air/steam circulation mode in which air and the thus generated steam are circulated in the cooking chamber 104.

As an alternative or in addition to the user manually supplying water into the bottom of the cooking chamber 104, the cooking appliance 100 may include a water dosing system (not visible) arranged to dose water into the cooking chamber 104 to generate steam.

Such a water dosing system may, for instance, include a water pipe and a pump configured to pump water, e.g. from a reservoir included in the cooking appliance 100, into the cooking chamber 104.

As an alternative, the steam could be generated outside the cooking chamber 104 and supplied into the cooking chamber 104 by injection.

In still other embodiments, the cooking appliance 100 does not include dedicated steam cooking components. In other words, the present disclosure should not be regarded as being limited to cooking appliances 100 with steam cooking capability, and is correspondingly applicable to all kinds of cooking appliances 100, and in particular table-top cooking appliances 100, such as table-top, top-loaded cooking appliances 100 having a fan 116 for gas circulation in the cooking chamber 104.

More generally, and referring to FIGs. 2 and 3, the cooking appliance 100 comprises a top and a bottom, with a front side 150 and a rear side 152 each extending from the bottom to the top. The rear side 152 opposes the front side 150 across the cooking chamber 104.

In such embodiments, and as best shown in FIG. 3, the heating module 106 may be arranged proximal to the front side 150, with the heating module 106 being correspondingly arranged distal with respect to the rear side 152.

It is noted, in a general sense, that as an alternative or in addition to the structural wall 102 being non-metallic in order to assist to protect sensitive parts, e.g. the motor 118 and/or the electronic control unit 124, arranged outside the cooking chamber 104 from being damaged by heat emanating from inside the cooking chamber 104, an air cooling channel 154 is arrangeable between the outer housing 136 and the structural wall 102, with the outer housing 136 delimiting, e.g. at the front side 150, at least one ambient air inlet 156 through which ambient air is deliverable into the air cooling channel 154, and with the outer housing 136 delimiting, e.g. at the rear side 152, at least one outlet 158 for expelling the air. In other words, the ambient air inlet(s) 156 and the outlet(s) 158 are arranged to define a cooling flow path between the front side 150 and the rear side 152, e.g. from the front side 150 towards the rear side 152.

The cooling provided by the air cooling channel 154 may assist to protect such sensitive parts from being damaged by heat emanating from inside the cooking chamber 104, particularly when such parts are arranged at or proximal to the front side 150 of the cooking appliance 100.

In some embodiments, this may be due, at least in part, to the at least one ambient air inlet 156 being at the front side 150, and the heating module 106 being proximal to the front side 150.

Thus, the fresh ambient air is initially introduced into the air cooling channel 154 at the side, in other words the front side 150, of the cooking appliance 100 requiring more cooling in view of the positioning of the heating module 106.

In some embodiments, such as shown in FIGs. 2 and 3, the at least one ambient air inlet 156 comprises, or is in the form of, inlet slots formed between the top outer housing part 136A and the middle outer housing part 136C, at the front side 150 of the cooking appliance 100.

The inlet slots between the top outer housing part 136A and the middle outer housing part 136C may be at least partially hidden from the user, for example by the top outer housing part 136A, e.g. by a lip portion of the top outer housing part 136A extending in the direction of the bottom of the cooking chamber 104.

The middle outer housing part 136C may, for instance, extend as a ring around a periphery of the cooking appliance 100.

In some embodiments, the at least one outlet 158 comprises, or is in the form of outlet slots, distributed along the rear side 152 of the cooking appliance 100 and formed between the top outer housing part 136A and the middle outer housing part 136C.

In some embodiments, the outer housing 136 delimits a further outlet for expelling the air. In such embodiments, the further outlet may comprise, or be in the form of, side outlet slots distributed along at least one side, e.g. along both sides, extending between the front side 150 and the rear side 152 of the cooking appliance 100.

The outlet slots and/or the side outlet slots between the top outer housing part 136A and the middle outer housing part 136C may be at least partially hidden from the user, for example by the top outer housing part 136A, e.g. by the lip portion of the top outer housing part 136A extending in the direction of the bottom of the cooking chamber 104.

In some embodiments, the electronic control unit 124 is arranged adjacent the air cooling channel 154. Thus, the air cooling channel 154 may assist to protect the electronic control unit 124 from being damaged by heat emanating from inside the cooking chamber 104.

The electronic control unit 124 may be arranged at or proximal to the front side 150, and correspondingly distal with respect to the rear side 152. Thus, the electronic control unit 124 may be arranged at or proximal to the side, in other words the front side 150, of the cooking appliance 100 that receives the fresh ambient air initially introduced into the air cooling channel 154. The concomitant enhanced cooling of the electronic control unit 124 may assist to protect the electronic control unit 124 from being damaged by heat emanating from inside the cooking chamber 104.

In some embodiments, the printed circuit board assembly 124A is arranged adjacent the at least one ambient air inlet 156 such that air entering the outer housing 136 initially passes over the printed circuit board assembly 124A.

This may assist cooling of electrical components, e.g. processor(s), mounted via the printed circuit board assembly 124A.

The cooling air may then, for instance, be passed over the cooking chamber 104 and expelled via the at least one outlet 158.

Alternatively or additionally, the motor 118 may be arranged proximal to the front side 150, e.g. with the spindle 120 extending towards the rear side 152. Thus, the motor 118 may be arranged at or proximal to the side, in other words the front side 150, of the cooking appliance 100 that receives the fresh ambient air initially introduced into the air cooling channel 154. The concomitant enhanced cooling of the motor 118 may assist to protect the motor 118 from being damaged by heat emanating from inside the cooking chamber 104.

For example, the electronic control unit 124 and the motor 118 are each located adjacent to inlet slot(s) defining the at least one ambient air inlet 156.

In some embodiments, the user interface 126 is arranged at or proximal to the front side 150, and correspondingly distal with respect to the rear side 152.

Thus, the front side 150 of the cooking appliance 100 may be the one at which the user receives, e.g. is displayed, information via the user interface 126 and/or the user entry is made via the user interface 126.

Alternatively or additionally, a power cord connecting to the plug 127 may extend from the rear side 152 of the cooking appliance 100.

In some embodiments, such as that shown in FIG. 3, the electronic control unit 124 and the user interface 126 are arranged at or proximal to the front side 150, with the heating module 106 and the motor 118 being also arranged proximal to the front side 150.

In some embodiments, such as shown in FIGs. 1 to 3, the cooking appliance 100 comprises a cooling fan 160 arranged to displace air in the air cooling channel 154.

Rotation of the cooling fan 160 may be driven in any suitable manner. In some embodiments, such as those shown in FIGs. 1 to 3, the motor 118 that drives rotation of the fan 116 is further arranged to rotate the cooling fan 160. For example, both the fan 116 and the cooling fan 160 may be mounted to the spindle 120, in other words shaft, of a single motor 118.

This may provide an advantageously simple and cost-effective design. This design may also enable a compact design of the air cooling and gas circulation systems at the front side 150 of the cooking appliance 100.

The cooling fan 160 is, in at least some embodiments, arranged to draw air into the air cooling channel 154 via the at least one ambient air inlet 156 and cause the air to be expelled via the at least one outlet 158.

Thus, humidity in the cooking chamber 104, and potentially humidity leaked from the cooking chamber 104 via insufficiently sealed interfaces, may be pushed by the flow generated, at least in part, by the cooling fan 160 in the direction of the rear side 152 of the cooking appliance 100. This can assist to keep such humidity away from the ambient air inlet(s) 156 and, for example, sensitive component(s), e.g. electronic components, arranged at or proximal to the front side 150 of the cooking appliance 100.

The electronic control unit 124, the motor 118, and the cooling fan 160 may, for example, be arranged next to each other at the front side 150 of the cooking appliance 100.

In some embodiments, such as shown in FIGs. 1 to 3, the cooking appliance 100 comprises an air cooling channel housing portion 162 arranged between the cooling fan 160 and the motor 118.

The air cooling channel housing portion 162 may assist to guide and/or retain air in the air cooling channel 154.

The non-metallic, e.g. plastic, structural wall 102 separates the heating module 106, e.g. the heater 108 and the fan 116, from the motor 116 and cooling fan 160 arranged outside the cooking chamber 104.

This may assist to improve cooking and cooling efficiency, as well as assisting to provide a simplified cooking appliance 100 design. Regarding the latter, the cooking appliance 100 may not include a heat isolation material, e.g. fiberglass lagging or aluminium foil, outside the cooking chamber 104.

Alternatively, only limited heat isolation material, e.g. fiberglass lagging and/or aluminium foil, may be included in the cooking appliance 100, e.g. wrapped around the structural wall 102.

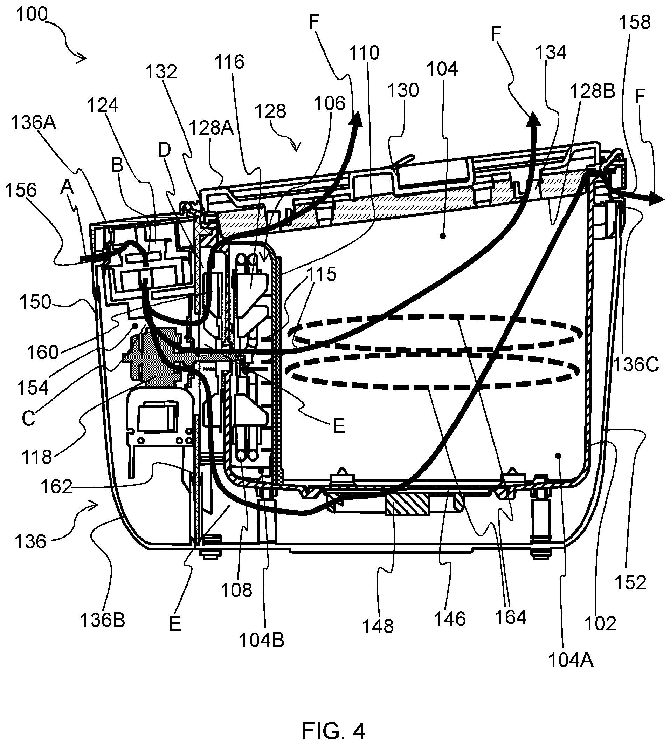

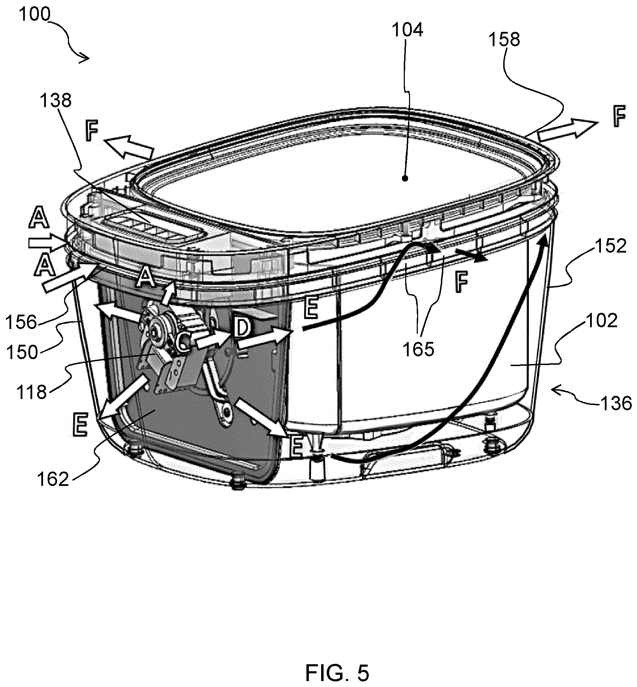

FIGs. 4 and 5 depict fluid flow and circulation in the cooking appliance 100 according to embodiments of the present disclosure. The ambient air, in other words cooling air, enters, at A, the cooking appliance 100 via the ambient air inlet(s) 156, e.g. via the ambient air inlets 156 in the form of inlet slots formed between the top outer housing part 136A and the middle outer housing part 136C, at the front side 150 of the cooking appliance 100.

Immediately following entering the cooking appliance 100, the flow passes, at B, the electronic control unit 124, e.g. to which the user interface 126 is connected, and passes, at C, the motor 118, e.g. which drives rotation of both the cooling fan 160 and the fan 116.

The cooling fan 160, at D, draws the air through the air cooling channel housing portion 162 and the airflow is directed, at E, towards the cooking chamber 104.

Guiding elements (not visible) may, for example, distribute the flow across the surface of the cooking chamber 104.

The dotted lines 164 in FIG. 4 denote gas circulation in the cooking chamber 104 due, in such embodiments, to the fan 116 rotating as well as the cooling fan 160 rotating.

The air finally exits the cooking appliance 100, at F, via the at least one outlet 158, e.g. via the at least one outlet 158 in the form of outlet slots distributed along the rear side 152 of the cooking appliance 100 and formed between the top outer housing part 136A and the middle outer housing part 136C.

The air may also exit the cooking appliance 100, at F, via side outlet slots 165 distributed along at least one side extending between the front side 150 and the rear side 152 of the cooking appliance 100.

It is noted that the cooling flow path may be a relatively short flow path without heavy redirection of the flow. This may assist to provide efficient cooling.

Cold flow investigations were performed to evaluate the air cooling design according to embodiments described herein. Thermal imaging measurements clearly indicated advantageous cooling, in particular at the front side 150 of the cooking appliance 100. Thus, sensitive parts, such as the electronic control 124 and the motor 118 can be protected from heat emanating from the cooking chamber 104, particularly when arranged at or proximal to the cooled front side 150 of the cooking appliance 100.

Experiments were also undertaken to determine heating behavior of the structural wall 102 adjacent the heater 108.

Temperature measurements were made at four different positions on the structural wall 102 of the exemplary cooking appliance 100 depicted in FIG. 2: heater 108 top back; heater 108 connection point; heater 108 bottom back; and heater bottom bottom.

The heater 108 top back position is a region of the structural wall 102 behind and aligned with the top of the heater 108, which top of the heater 108 is proximal to the lid 128.

The heater 108 connection point position is a region of the structural wall 102 at which the heater 108 is connected, in other words mounted, to the structural wall 102.

The heater 108 bottom back position is a region of the structural wall 102 behind and aligned with the bottom of the heater 108, which bottom of the heater 108 is proximal to the bottom of the cooking chamber 104, and distal with respect to the lid 128.

The heater 108 bottom bottom position is a region of the structural wall 102 at the bottom of the cooking chamber 104 underneath the heater 108.

In test run 1, the motor 118 was switched off to simulate a fault or failure condition of the cooking appliance 100, and the cooking appliance 100 was heated up according to a set temperature of 180°C. In this case, the set temperature is an air temperature in the cooking chamber 104.

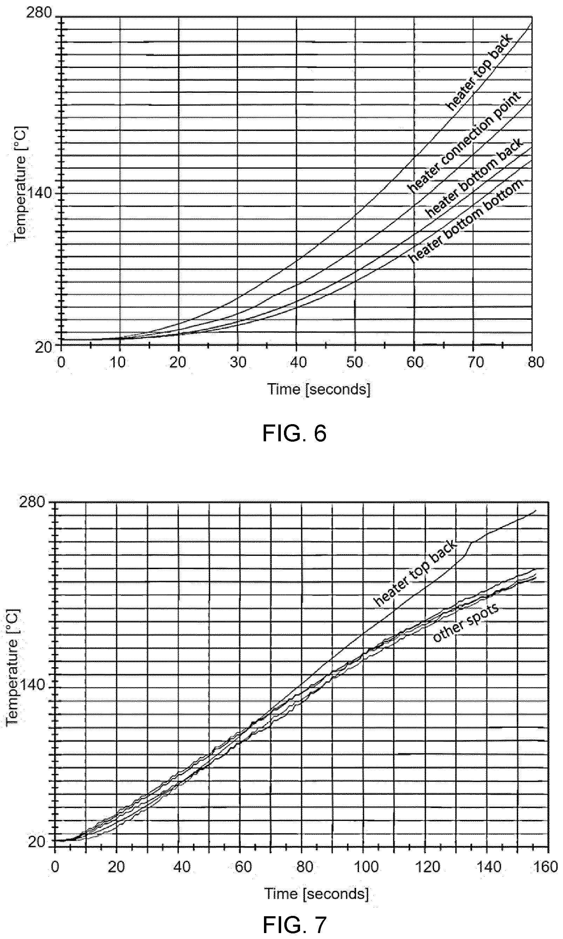

After 60 seconds, the temperature measured at the heater 108 bottom bottom position reached approximately 100°C, and the temperature measured at the heater 108 top back position reached approx. 170°C. As shown in FIG. 6, this difference increased with time.

In test run 2, the motor 118 was switched on to rotate the fan 116 and the cooling fan 160. The cooking appliance 100 was heated up to a set temperature of >250°C to simulate another fault or failure condition of the cooking appliance 100. In this case, the set temperature is an air temperature in the cooking chamber 104.

Although the temperature differences between the temperature measurement positions are smaller than observed in test run 1, as shown in FIG. 7 the heater 108 top back position still represented a hot spot on the structural wall 102. After approximately 100 seconds, the temperature difference between the temperature measured at the heater 108 top back position exceeded that of each of the other three positions by around 20°C.

Thus, an uneven temperature distribution was observed across the structural wall 102. Such an uneven temperature distribution can lead to the occurrence of local hot spots.

During normal cooking operation, higher temperatures at local spots can lead to an uneven temperature load on the material, e.g. the above-described non-metallic material, forming the cooking chamber 102. This can result in long-term deformations of the material, and other signs of aging, such as cracks, can arise more easily.

When the cooking appliance 100 is in a fault condition, e.g. with the cooking appliance 100 being operated without the fan(s) 116, 160 being rotated and/or at higher than normal set temperatures, such as >250°C, the temperature at the hot spots could even exceed the melting temperature of the material, e.g. the above-described non-metallic material, forming the cooking chamber 102, before the power of the cooking appliance 100 is interrupted by a thermal fuse assembly.

Various factors may contribute to an uneven temperature distribution across the structural wall 102, for example uneven heat transmission from the heater 108 and interacting components such as mounting element(s) for mounting the heater 108 to the structural wall 102. Whilst such potential contributors to an uneven temperature distribution across the structural wall 102 may be compensated, in other words balanced, to some extent by the material forming the structural wall 102, such compensation may be limited in the scenario in which the material has relatively poor heat conduction properties.

In some embodiments, such as shown in FIGs. 3, 8 and 9, the cooking appliance 100 comprises a heat shield 166 arranged between the heater 108 and the structural wall 102, e.g. the non-metallic structural wall 102.

The heat shield 166 may assist to enhance distribution of heat across the structural wall 102, and to damp local temperature peaks on the structural wall 102.

The heat shield 166 may have enhanced thermal conductivity properties compared to the material, e.g. the non-metallic material, forming the structural wall 102.

The heat shield 166 may also, in some embodiments, assist to shield the above-described cooling system from the heating module 106, thereby helping to keep each of these functional units in its desired/intended operating state.

Moreover, the heat shield 166 may assist to improve efficiency of operation of the cooking appliance 100 by enhancing heat transfer to gas in the cooking chamber 104, e.g. gas circulated in the cooking chamber 104 by the fan 116.

In embodiments in which the structural wall 102 comprises, e.g. is formed from, a plastic material, the heat shield 166 may assist to ensure the cooking appliance 100 is operable in a safe operating condition. For example, the heat shield 166 may assist to lessen risk of melting and/or thermal decomposition of such a plastic material.

The heat shield 166 may be formed from any suitable material. Particular mention is made of a metallic material, in other words a metal, such as aluminium, and/or a metal alloy, such as steel.

In alternative embodiments, the heat shield 166 is non-metallic.

Such a non-metallic heat shield 166 can be used, for instance, in embodiments in which the heat shield 166 itself is not being used to transfer energy to a thermal fuse assembly.

In some embodiments, the heat shield 166 is formed from stainless steel.

Forming the heat shield 166 from stainless steel may mean that the heat shield 166 is robust and resistant to corrosion, particularly in view of the humidity inside the cooking chamber 104, e.g. when steam cooking is taking place therein.

In a non-limiting example, the structural wall 102 is a plastic structural wall 102, and the heat shield 166 is formed from steel, e.g. stainless steel.

The heat shield 166 can have any suitable shape provided that the heat shield 166 can be arranged between the heater 108 and the structural wall 102, and thereby assist to enhance distribution of heat across the structural wall 102.

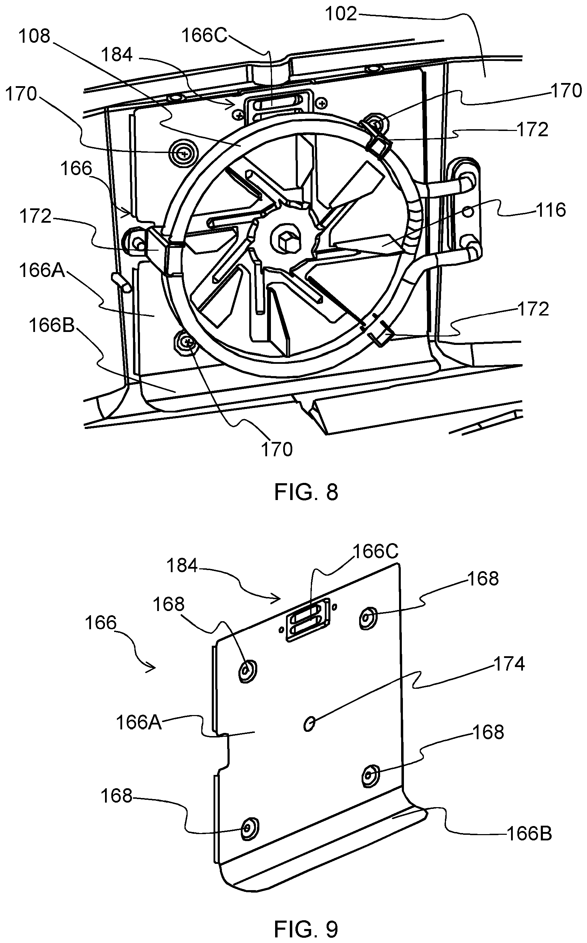

In some embodiments, and as best shown in FIGs. 8 and 9, the heat shield 166 comprises a main portion 166A and a further portion 166B extending from the main portion 166A. In such embodiments, the main portion 166A is for arranging between the heater 108 and a side portion of the structural wall 102 behind the heater 108, and the further portion 166B is for arranging between the heater 108 and a bottom portion of the structural wall 102 underneath the heater 108.

Thus, the heat shield 166 may be arranged adjacent the heater 108 and on both the side portion and the bottom portion of the structural wall 102 that at least partly delimits the cooking chamber 104.

In such embodiments, the further portion 166B may curvedly extend from the main portion 166A, e.g. so as to follow a curvature of the surface of the structural wall 102 between the side portion and the bottom portion.

The heat shield 166 may be mounted such that a gap is provided between at least part of the heat shield 166 and the structural wall 102.

Such a gap may provide some tolerance, e.g. to accommodate the structural wall 102 and the heat shield 166 having different coefficients of thermal expansion relative to each other.

The gap may nonetheless be selected to be as small as possible so as to minimize the risk of food debris, grease, etc. collecting in the gap.

The heat shield 166 may be mounted in any suitable manner. In some embodiments, such as shown in FIGs. 8 and 9, the heat shield 166 comprises, e.g. delimits, one or more fastening points 168 by which the heat shield 166 may be secured to the structural wall 102.

The heat shield 166 may be secured to the structural wall 102 at each of the one or more fastening points 168 via one or more fasteners 170, e.g. screws.

The one or more fasteners 170 may, for example, also assist to secure the heater 108 to the structural wall 102. For instance, the fastener(s) 170 may, as well as securing the heat shield 166 to the structural wall 102, secure a mounting element 172 for mounting the heater 108 to the structural wall 102. An example of this is best shown in FIG. 8.

In embodiments, such as shown in FIGs. 3 and 8, in which the fan 116 is arranged, together with the heater 108, in the cooking chamber 104, the heat shield 166, e.g. the main portion 166A thereof, may delimit a hole 174 through which the spindle 120 of the motor 118 can extend in order to enable the motor 118 to drive rotation of the fan 116. An example in which such a hole 174 is provided in the heat shield 166 is depicted in FIG. 9.

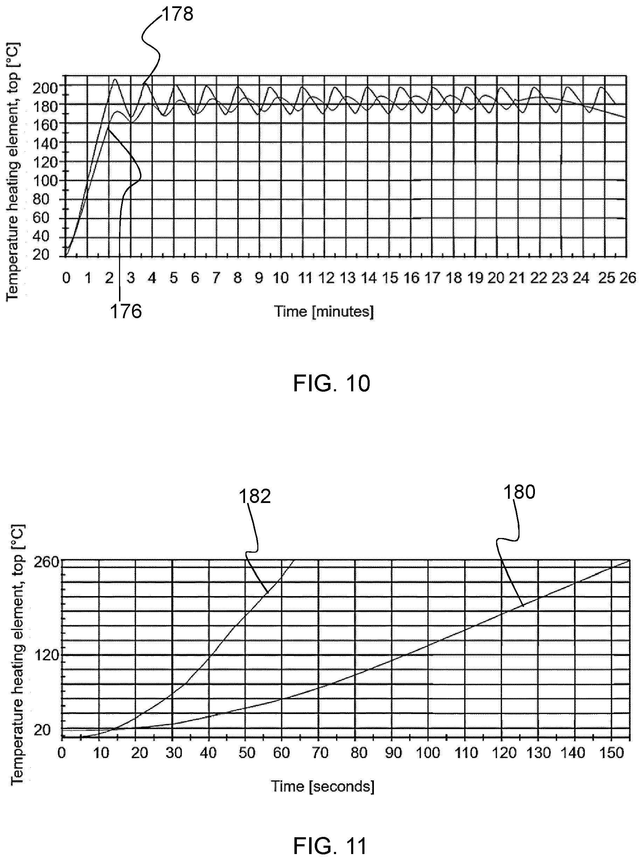

Experiments were undertaken to verify improvement provided by the heat shield. Measurement of the temperature at the heater 108 top back position previously identified as a hot spot was carried out during normal operation of a cooking appliance 100 having such a heat shield 166, graph 176 in FIG. 10, and for a comparable cooking appliance 100 without such a heat shield 166, graph 178 in FIG. 10. These graphs 176, 178 illustrate that during normal operation of the cooking appliance 100, the heat shield 166 assists to damp temperature peaks by 10 to 30°C.

Similar measurements were made during failure mode operation of a cooking appliance 100 having such a heat shield 166, graph 180 in FIG. 11, and for a comparable cooking appliance 100 without such a heat shield 166, graph 182 in FIG. 11. The failure mode operation was with the cooking appliance 100 being operated without the fan(s) 116, 160 being rotated or operated at higher than normal set temperatures, such as >250°C. These graphs 180, 182 illustrate a significant enhancement in safety resulting from inclusion of the heat shield 166.

In at least some embodiments, such as shown in FIGs. 3 and 8, the cooking appliance 100 comprises a thermal fuse assembly 184.

Such a thermal fuse assembly 184 may be configured to interrupt powering of the cooking appliance 100 in response to a temperature exceeding a threshold.

In other words, the thermal fuse assembly 184 may, at detection of an unusually high temperature, immediately interrupt the cooking appliance's 100 power supply.

Thus, the thermal fuse assembly 184 may prevent damage to the cooking appliance 100 caused by a fault condition.

The thermal fuse assembly 184 may be configured, e.g. selected, such that the threshold at which the powering of the cooking appliance 100 is interrupted is under a temperature at which critical components become overheated.

However, for cost-related and technical reasons, such as avoiding exposure of the thermal fuse assembly 184 to a humid/moist environment, it may not be possible to place a thermal fuse assembly 184 directly at the location of each critical component. Hence a thermal fuse assembly 184 or fuse assemblies 184 may be positioned at (an)other location(s) with derived threshold temperature(s). Since such locations may be spatially removed from the location of critical component(s), there may be some delay before the threshold temperature for the thermal fuse assembly 184 at its location is exceeded. The further away the thermal fuse assembly 184 is from the location of the critical component(s), the lower the thermal fuse assembly's 184 threshold temperature.

Some locations spatially removed from the location of critical component(s) may not exceed a certain steady state temperature also as a result of a fault. The threshold temperature of the thermal fuse assembly 184 may therefore be selected to interrupt powering of the cooking appliance 100 at a temperature below such a steady state temperature.

As a consequence of these factors, the accuracy and timing for triggering the thermal fuse assembly 184 to interrupt powering of the cooking appliance 100 to avoid overheating at the location of critical component(s) deteriorates the further away the thermal fuse assembly 184 is located from the location of the critical component(s).

In general, the thermal fuse assembly's 184 threshold temperature may be lower but as close as possible to the temperature at which the critical component(s) become(s) overheated. In the event of overheating, it may be required to expose the thermal fuse assembly 184 as quickly as possible to its threshold temperature to prevent fault switching and to improve accuracy and reliability.

In cooking appliances 100, such as air cookers, in which the heating module 106 comprises the heater 108 and the fan 116 arranged to circulate gas heated by the heater 108 in the cooking chamber 104, one critical fault condition may be defective temperature regulation causing overheating of the heater 108. Another may be defective motor 118 operation causing no or inadequate rotation of the fan 116 and thus compromised transport of heat from the heater 108. Defective motor 118 operation may also, in certain embodiments, cause no or inadequate rotation of the cooling fan 160 and thus compromised cooling. Both defects may lead to overheating of the cooking chamber 104.

In at least some embodiments, the thermal fuse assembly 184 is in thermal communication with the cooking chamber 104, e.g. via a thermal guide to the cooking chamber 104.

This may assist to minimize delay in triggering the thermal fuse assembly 184 to interrupt powering of the cooking appliance 100.

Alternatively or additionally, the thermal fuse assembly 184 may be mounted proximal to the top of the cooking chamber 104.

In some embodiments, the thermal fuse assembly 184 is arranged at a region of the structural wall 102 behind and aligned with the top of the heater 108, which top of the heater 108 is proximal to the lid 128.

In other words, the thermal fuse assembly 184 may be arranged at the above-mentioned heater 108 top back position identified as a hot spot.

It may not be recommended to arrange the thermal fuse assembly 184 adjacent the heater 108 when the heater 108 is located in the cooking chamber 104. Arranging the thermal fuse assembly 184 in the cooking chamber 104 may risk exposing the thermal fuse assembly 184 to humidity and it may also be undesirable for wiring for connecting to the thermal fuse assembly 184 being required to extend through the structural wall 102.

Hence, in at least some embodiments, the thermal fuse assembly 184 is arranged, e.g. mounted, outside the cooking chamber 104.

As well as assisting to protect the thermal fuse assembly 184 from humidity arranging the thermal fuse assembly 184 outside the cooking chamber 104 may avoid electrical wires or connectors for connecting to the thermal fuse assembly 184 being required to extend through the structural wall 102.

One solution may be to arrange the thermal fuse assembly 184 at the structural wall 102 but outside the cooking chamber 104.

However, because the structural wall 102 is a non-metallic structural wall 102, there may be an undesirably long delay for triggering the thermal fuse assembly 184, due to the relatively low thermal conductivity of the non-metallic material, e.g. plastic material. Moreover, when a plastic material forms the structural wall 102, such a plastic material may itself be sensitive to elevated temperatures, such as temperatures above 230°C.

In some embodiments, the thermal fuse assembly 184 is mounted between the heater 108 and the structural wall 108.

In some embodiments, the thermal fuse assembly 184 is mounted to the heat shield 166.

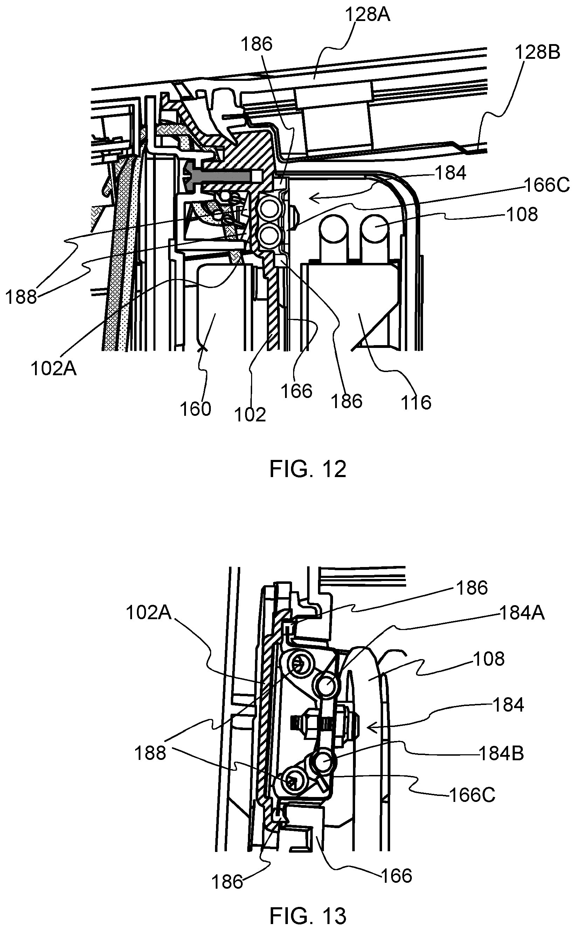

In such embodiments, such as shown in FIGs. 12 and 13, a fuse cover portion 166C of the heat shield 166 may be arranged between the thermal fuse assembly 184 and the cooking chamber 104.

Thus, the fuse cover portion 166C of the heat shield 166 may assist to protect the thermal fuse assembly 184 from conditions, in particular humidity, inside the cooking chamber 104.

In such embodiments, the thermal fuse assembly 184 may be covered on a side opposing the fuse cover portion 166C of the heat shield 166.

This covering may assist to minimize cooling of the thermal fuse assembly 184 by the above-described cooling system.

More generally, the thermal fuse assembly 184 may be thermally isolated from the cooling airflow provided by the cooling fan 160.

In some embodiments, the thermal fuse assembly 184 is covered on the side opposing the fuse cover portion 166C of the heat shield 166 by a fuse cover part 102A of the structural wall 102, e.g. the non-metallic, such as plastic, structural wall 102.

In such embodiments, the cooking appliance 100 may include a fuse sealing 186, such as a silicone rubber gasket, arranged between the fuse cover part 102A and the fuse cover portion 166C so as to seal the thermal fuse assembly 184 between the fuse cover part 102A and the fuse cover portion 166C.

This fuse sealing 186 may assist to protect the thermal fuse assembly 184 and connectors 188 connecting to the thermal fuse assembly 184 from humidity.

It is noted that the heat shield 166 may itself be positioned relatively close to, in other words with only a small gap between the heat shield 166 and, the structural wall 102, as previously described. This gap may accommodate the fuse sealing 186.

More generally, the cooking appliance 100 may comprise a fuse housing 102A, 166C for receiving the thermal fuse assembly 184. In such embodiments, the fuse housing 102A, 166C comprises a thermally conductive portion 166C arranged to thermally couple the thermal fuse assembly 184 to the cooking chamber 104.

The thermally conductive portion 166C may have enhanced heat conduction properties relative to the structural wall 102, for instance the non-metallic structural wall 102, e.g. plastic structural wall 102, and therefore assist to shorten any delay in triggering the thermal fuse assembly 184 to interrupt powering of the cooking appliance 100.

The fuse housing 102A, 166C may also include a thermally isolating part 102A, e.g. opposing the thermally conductive portion 166C. Such a thermally isolating part 102A may, for instance, be formed from a non-metallic, e.g. plastic, material.

The thermally isolating part may assist to thermally isolate the thermal fuse assembly 184 from the cooling airflow provided by the cooling fan 160.

A fuse sealing 186, such as a silicone rubber gasket, arranged between the thermally isolating part 102A and the thermally conductive portion 166C may seal the thermal fuse assembly 184 between the thermally isolating part 102A and the thermally conductive portion 166C.

The thermal fuse assembly 184 can include any number of thermal fuses 184A, 184B, for example one, two, three, and so on. Including a plurality of thermal fuses 184A, 184B in the thermal fuse assembly 184 may assist to mitigate the risk associated with malfunction of a single thermal fuse.

For verification, the embodiment shown in FIGs. 12 and 13 was compared to a thermal fuse assembly 184 arranged in a metal box attached to the structural wall 102 and arranged inside the cooking chamber 104 to the top left of the heater 108 when the heater 108 is viewed from within the cooking chamber 104 along the axis of the spindle 120 of the motor 118.

When the cooking appliance 100 was operated in a way that simulates failure: lid 128 on and motor 118 off, the temperature measured at the above-mentioned heater 108 top back position was 270°C after 60 seconds while the temperature at the thermal fuse assembly 184 in the metal box was only 40°C. By contrast, in the case of the embodiment shown in FIGs. 12 and 13, the temperature measured at the heater 108 top back position was 270°C while the temperature at the thermal fuse assembly 184 was 305°C.

As an illustrative non-limiting example, the following table provides temperature values indicative of deviation, e.g. an optimized deviation, between thermal fuse assembly 184 temperature and cooking chamber 104 temperature.

| | Temperature/°C | | |
|---|---|---|---|
| | Plastic structural wall 102 | Stainless steel heat shield 166 | Thermal fuse assembly 184 |
| Normal operation | 200 | 220 | 195 |
| Failure mode | 250 | 270 | 220-245 |
| | | | 220°C = maximum temperature of thermal fuse assembly during normal operation, 195°C, + 25°C margin |
| | | | 245°C = thermal fuse assembly temperature when heat shield reaches 270°C |
| Margin: Normal operation - failure mode | 50 | 50 | 25-50 |

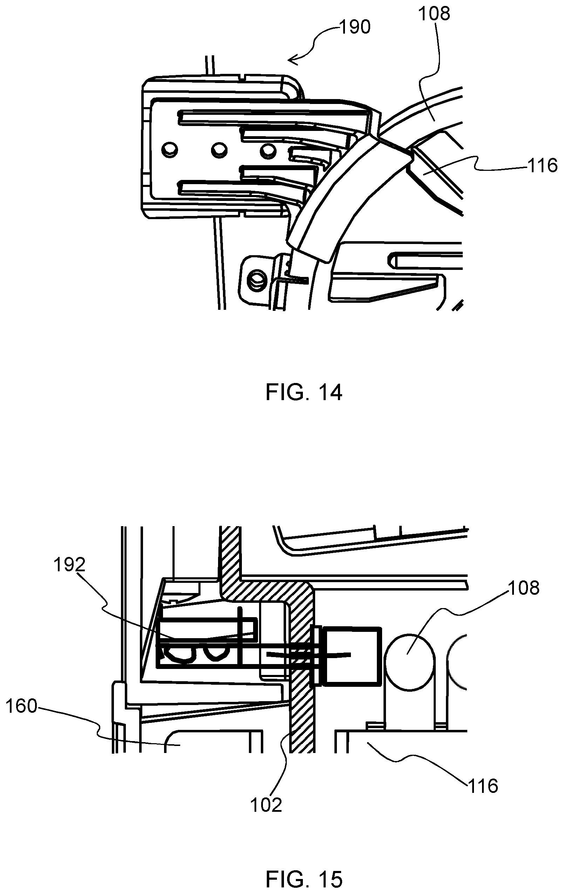

The thermal fuse assembly 184 being in thermal communication with the cooking chamber 104 can be implemented in any suitable manner. FIGs. 14 to 17 show various thermal fuse assembly 184 mounting concepts that can be employed as an alternative to that shown in FIGs. 12 and 13.

In some embodiments, such as that shown in FIG. 14, the cooking appliance 100 comprises a heat pipe 190 between the heater 108 and a metal housing in which the thermal fuse assembly 184 is arranged.

Such a heat pipe 190 may assist to improve heat transmission from the heater 108 to the metal housing.

In some embodiments, such as that shown in FIG. 15, the cooking appliance 100 comprises a thermal guide 192 arranged to protrude from the thermal fuse assembly 184 outside the cooking chamber 104 into the cooking chamber 104.

In such embodiments, the thermal guide 192 may protrude into the cooking chamber 104 to a position identified as a hot spot, such as the region of the structural wall 102 behind and aligned with the top of the heater 108, which top of the heater 108 is proximal to the lid 128.

In such embodiments, the thermal guide 192 may comprise, or be in the form of, a heat conducting aluminium part.

Thus, the heat transmission to the thermal fuse assembly 184, mounted at the outside of the cooking chamber 104, is provided via the heat conducting aluminium part.

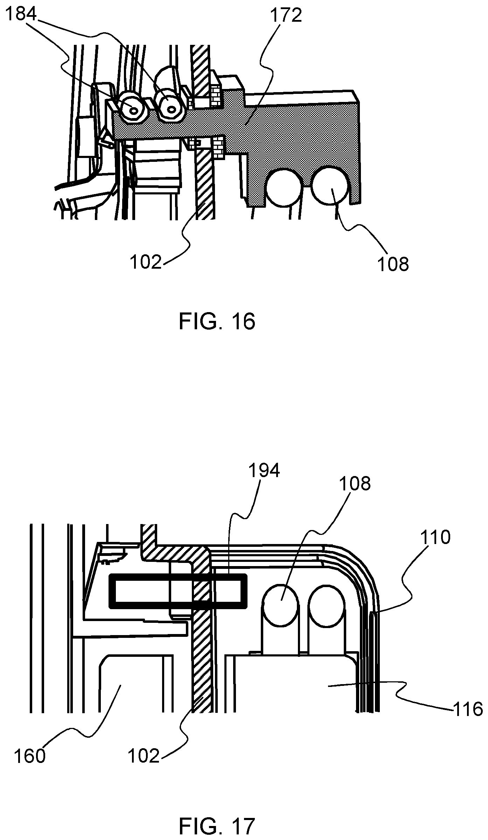

In some embodiments, such as that shown in FIG. 16, a mounting element 172 that mounts the heater 108 to the structural wall 102 is configured to transfer heat to the thermal fuse assembly 184.

Thus, the mounting element 172 which fixes the heater 108 to the structural wall 102 can additionally act as a heat transmission part for transferring heat from the heater 108 to the thermal fuse assembly 184.

In some embodiments, such as that shown in FIG. 17, the cooking appliance 100 comprises a metal tube 194 in which a thermal fuse 184A, 184B of the thermal fuse assembly 184 can be arranged. In such embodiments, the metal tube 194 may protrude into the cooking chamber 104.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A cooking appliance (100) comprising:
a structural wall (102) that at least partly delimits a cooking chamber (104) in which food is receivable; and
a heating module (106) that comprises a heater (108) and a fan (116) arranged to circulate gas in the cooking chamber (104); wherein
the heating module (106) is arranged in the cooking chamber (104), and a fan motor (118) is arranged outside the cooking chamber (104),
**characterized in that** the structural wall (102) is a non-metallic structural wall (102).

2. The cooking appliance (100) according to claim 1, wherein the non-metallic structural wall (102) comprises a plastic material.

3. The cooking appliance (100) according to claim 1 or claim 2, wherein the non-metallic structural wall (102) is formed as a single piece.

4. The cooking appliance (100) according to any one of claims 1 to 3, comprising a heat shield (166), wherein the heat shield being arranged between the heater and the structural wall (102).

5. The cooking appliance (100) according to claim 4, comprising a thermal fuse assembly (184) in thermal communication with the cooking chamber (104), wherein the thermal fuse assembly is mounted between the heater (108) and the structural wall (102).

6. The cooking appliance (100) according to claim 5, wherein the thermal fuse assembly (184) is mounted to the heat shield (166).

7. The cooking appliance (100) according to any one of claims 1 to 6, comprising a partition wall (110) arranged in the cooking chamber (104) to partition the cooking chamber into a food receiving zone (104A) for receiving the food and a heating module zone (104B) in which the heating module (106) is arranged.

8. The cooking appliance (100) according to claim 7, wherein the partition wall (110) delimits gas delivery vents (112) through which heated gas from the heating module zone (104B) is deliverable into the food receiving zone (104A); and a gas inlet (114) through which gas from the food receiving zone is deliverable into the heating module zone, wherein the gas inlet is centrally arranged in the partition wall with the gas delivery vents being peripherally arranged in the partition wall.

9. The cooking appliance (100) according to any one of claims 1 to 8, comprising:
an outer housing (136);
an air cooling channel (154) arranged between the outer housing and the structural wall (102); and
a cooling fan (160) arranged to displace air in the air cooling channel.

10. The cooking appliance (100) according to claim 9, comprising the motor (118) arranged to drive rotation of the fan (116) and the cooling fan (160).

11. The cooking appliance (100) according to claim 9, comprising an electronic control unit (124) adjacent a portion of the air cooling channel (154).

12. The cooking appliance (100) according to any one of claims 9 to 11, comprising a bottom and a top when orientated for use; a front side (150) extending between the bottom and the top; and a rear side (152) extending between the bottom and the top, the rear side opposing the front side across the cooking chamber (104), wherein the outer housing (136) delimits at least one ambient air inlet (156) through which ambient air is deliverable into the air cooling channel (154), and wherein the outer housing delimits at least one outlet (158) for expelling the air, the at least one ambient air inlet and the at least one outlet being arranged to define a cooling flow path between the front side and the rear side.

13. The cooking appliance (100) according to claim 12, the heating module (106) being arranged closer to the front side than to the rear side.

## Patentansprüche

1. Kochgerät (100), umfassend:
eine tragende Wand (102), die zumindest teilweise eine Garkammer (104) begrenzt, in der Nahrungsmittel aufnehmbar sind; und
ein Heizmodul (106), das eine Heizung (108) und einen Ventilator (116) umfasst, der angeordnet ist, um Gas in der Garkammer (104) zirkulieren zu lassen; wobei
das Heizmodul (106) in der Garkammer (104) angeordnet ist und ein Lüftermotor (118) außerhalb der Garkammer (104) angeordnet ist,
**dadurch gekennzeichnet, dass** die tragende Wand (102) eine nichtmetallische tragende Wand (102) ist.

2. Kochgerät (100) nach Anspruch 1, wobei die nichtmetallische tragende Wand (102) ein Kunststoffmaterial umfasst.

3. Kochgerät (100) nach Anspruch 1 oder Anspruch 2, wobei die nichtmetallische tragende Wand (102) aus einem einzigen Stück gebildet ist.

4. Kochgerät (100) nach einem der Ansprüche 1 bis 3, umfassend einen Hitzeschild (166), wobei der Hitzeschild zwischen der Heizung und der tragenden Wand (102) angeordnet ist.

5. Kochgerät (100) nach Anspruch 4, umfassend eine thermische Sicherungsanordnung (184) in thermischer Verbindung mit der Garkammer (104), wobei die thermische Sicherungsanordnung zwischen der Heizung (108) und der tragenden Wand (102) montiert ist.

6. Kochgerät (100) nach Anspruch 5, wobei die thermische Sicherungsanordnung (184) am Hitzeschild (166) montiert ist.

7. Kochgerät (100) nach einem der Ansprüche 1 bis 6, umfassend eine Trennwand (110), die in der Garkammer (104) angeordnet ist, um die Garkammer
in eine Nahrungsmittelaufnahmezone (104A) zum Aufnehmen der Nahrungsmittel und eine Heizmodulzone (104B), in der das Heizmodul (106) angeordnet ist, zu unterteilen.

8. Kochgerät (100) nach Anspruch 7, wobei die Trennwand (110) Gaszufuhröffnungen (112) begrenzt, durch die erhitztes Gas aus der Heizmodulzone (104B) in die Nahrungsmittelaufnahmezone (104A) zuführbar ist; und einen Gaseinlass (114), durch den Gas aus der Nahrungsmittelaufnahmezone in die Heizmodulzone zuführbar ist, wobei der Gaseinlass mittig in der Trennwand angeordnet ist, wobei die Gaszufuhröffnungen peripher in der Trennwand angeordnet sind.

9. Kochgerät (100) nach einem der Ansprüche 1 bis 8, umfassend:
ein Außengehäuse (136);
einen Luftkühlungskanal (154), der zwischen dem Außengehäuse und der tragenden Wand (102) angeordnet ist; und
einen Kühllüfter (160), der angeordnet ist, um Luft im Luftkühlkanal zu verdrängen.

10. Kochgerät (100) nach Anspruch 9, umfassend den Motor (118), der angeordnet ist, um Drehung des Lüfters (116) und des Kühllüfters (160) anzutreiben.

11. Kochgerät (100) nach Anspruch 9, umfassend eine elektronische Steuereinheit (124) neben einem Abschnitt des Luftkühlkanals (154).

12. Kochgerät (100) nach einem der Ansprüche 9 bis 11, das, wenn es zum Gebrauch ausgerichtet ist, eine Unterseite und eine Oberseite umfasst; eine Vorderseite (150), die sich zwischen der Unterseite und der Oberseite erstreckt; und eine Rückseite (152), die sich zwischen der Unterseite und der Oberseite erstreckt, wobei die Rückseite der Vorderseite über die Garkammer (104) hinweg gegenüberliegt, wobei das Außengehäuse (136) zumindest einen Umgebungslufteinlass (156) begrenzt, durch den Umgebungsluft in den Luftkühlkanal (154) zuführbar ist, und wobei das Außengehäuse zumindest einen Auslass (158) zum Ausstoßen der Luft begrenzt, wobei der zumindest eine Umgebungslufteinlass und der zumindest eine Auslass angeordnet sind, um einen Kühlströmungspfad zwischen der Vorderseite und der Rückseite zu definieren.

13. Kochgerät (100) nach Anspruch 12, wobei das Heizmodul (106) näher an der Vorderseite als an der Rückseite angeordnet ist.

## Revendications

1. Appareil de cuisson (100) comprenant :
une paroi structurale (102) qui délimite au moins partiellement une chambre de cuisson (104) dans laquelle les aliments peuvent être reçus ; et
un module de chauffage (106) qui comprend un élément chauffant (108) et un ventilateur (116) agencés pour faire circuler un gaz dans la chambre de cuisson (104) ; dans lequel
le module de chauffage (106) est agencé dans la chambre de cuisson (104), et un moteur (118) de ventilateur est agencé à l'extérieur de la chambre de cuisson (104),
**caractérisé en ce que** la paroi structurale (102) est une paroi structurale non métallique (102).

2. Appareil de cuisson (100) selon la revendication 1, dans lequel la paroi structurale non métallique (102) comprend un matériau plastique.

3. Appareil de cuisson (100) selon la revendication 1 ou la revendication 2, dans lequel la paroi structurale non métallique (102) est formée d'une seule pièce.

4. Appareil de cuisson (100) selon l'une quelconque des revendications 1 à 3, comprenant un bouclier thermique (166), dans lequel le bouclier thermique est agencé entre l'élément chauffant et la paroi structurale (102).

5. Appareil de cuisson (100) selon la revendication 4, comprenant un ensemble fusible thermique (184) en communication thermique avec la chambre de cuisson (104), dans lequel l'ensemble fusible thermique est monté entre l'élément chauffant (108) et la paroi structurale (102).

6. Appareil de cuisson (100) selon la revendication 5, dans lequel l'ensemble fusible thermique (184) est monté sur le bouclier thermique (166).

7. Appareil de cuisson (100) selon l'une quelconque des revendications 1 à 6, comprenant une cloison (110) agencée dans la chambre de cuisson (104) pour séparer la chambre
de cuisson en une zone de réception d'aliments (104A) destinée à recevoir les aliments et une zone (104B) de module de chauffage dans laquelle est agencé le module de chauffage (106).

8. Appareil de cuisson (100) selon la revendication 7, dans lequel la cloison (110) délimite des évents de distribution de gaz (112) à travers lesquels le gaz chauffé provenant de la zone (104B) de module de chauffage peut être distribué dans la zone de réception d'aliments (104A) ; et une entrée de gaz (114) à travers laquelle le gaz provenant de la zone de réception d'aliments peut être distribué dans la zone de module de chauffage, dans lequel l'entrée de gaz est agencée de manière centrale dans la cloison, les évents de distribution de gaz étant agencés en périphérie dans la cloison.

9. Appareil de cuisson (100) selon l'une quelconque des revendications 1 à 8, comprenant :
un boîtier externe (136) ;
un canal de refroidissement par air (154) agencé entre le boîtier externe et la paroi structurale (102) ; et
un ventilateur de refroidissement (160) agencé pour déplacer l'air dans le canal de refroidissement par air.

10. Appareil de cuisson (100) selon la revendication 9, comprenant le moteur (118) agencé pour commander la rotation du ventilateur (116) et du ventilateur de refroidissement (160).

11. Appareil de cuisson (100) selon la revendication 9, comprenant une unité de commande électronique (124) adjacente à une partie du canal de refroidissement par air (154).

12. Appareil de cuisson (100) selon l'une quelconque des revendications 9 à 11, comprenant un fond et un dessus lorsqu'il est orienté pour l'utilisation ; un côté avant (150) s'étendant entre le fond et le dessus ; et un côté arrière (152) s'étendant entre le fond et le dessus, le côté arrière étant opposé au côté avant à travers la chambre de cuisson (104), dans lequel le boîtier externe (136) délimite au moins une entrée d'air ambiant (156) à travers laquelle l'air ambiant peut être distribué dans le canal de refroidissement par air (154), et dans lequel le boîtier externe délimite au moins une sortie (158) pour expulser l'air, la au moins une entrée d'air ambiant et la au moins une sortie étant agencées pour définir un trajet de flux de refroidissement entre le côté avant et le côté arrière.

13. Appareil de cuisson (100) selon la revendication 12, le module de chauffage (106) étant agencé plus près du côté avant que du côté arrière.
